# EUROPEAN PATENT APPLICATION

(11) **EP 4 632 031 A1**
(43) Date of publication of application: **15.10.2025**
(21) Application number: 25160540.8
(22) Date of filing: 27.02.2025
(51) Int. Cl.: C09K 5/06, D01F 1/10, C08K 5/06, C08K 5/09, C08K 5/101, C08K 5/134, C08K 5/17, C08K 5/372

(54) **TEMPERATURE-REGULATING COMPOSITE MATERIAL**

(30) Priority: 12.03.2024 TW 113108952
(71) Applicant: Acelon Chemicals & Fiber Corporation, Pu Yan Hsiang, Chang Hua County 516 (TW)
(72) Inventor: CHOU, Wen-Tung, 514 Xihu Township, Changhua County (TW); CHOU, Shao-Hua, 403 Taichung City (TW); YEH, Je-Yuan, Shuishang Township, Chiayi County 608 (TW)
(74) Representative: Viering, Jentschura & Partner mbB Patent- und Rechtsanwälte

(57) **Abstract**

A temperature-regulating composite material includes a thermoplastic material, a phase change material, and an antioxidant. A transition temperature of the phase change material ranges from 0°C to 65°C. An addition of the antioxidant is based on a content of the phase change material and is less than or equal to 10% of the content of the phase change material. A decomposition temperature of the temperature-regulating composite material ranges from 140°C to 400°C. A temperature-regulating fabric includes a plurality of composite yarns (10). Each composite yarn (10) has a core layer (11) and a wrapping layer (12) correspondingly enclosing the core layer (11). The core layer (11) includes the temperature-regulating composite material. A temperature regulating factor of the temperature-regulating fabric is less than 0.8.

## Description

### BACKGROUND OF THE INVENTION

### Technical Field

The present invention relates generally to a synthetic fiber technology, and more particularly to a temperature-regulating composite material.

### Description of Related Art

With the development of textile technology and global climate change, fabrics with high performances are required, and a temperature-regulating material is added to textile fibers. Recently, a phase change material is added to fibers, wherein the phase change material could change phases at a particular temperature range. The phase change material could absorb or release a large amount of latent heat during phase change to provide a temperature-regulating effect, thereby keeping warm and cooling.

In a conventional manufacturing process of yarns in textile field, fibers are melted at high temperature and are compressed to form a melted body, and then the fibers are processed to form the yarns. As the problem of decomposition of the phase change material occurs at high temperature melting, a content loss of the phase change material in the fibers is increased, so that the yarns manufactured from the fibers could not steadily provide the temperature-regulating effect.

### BRIEF SUMMARY OF THE INVENTION

In view of the above, the primary objective of the present invention is to provide a temperature-regulating composite material and a fabric having the same, so that a decomposition temperature of the phase change material could be increased, thereby relieving the problem that the phase change material is denatured during a melt-spinning process.

The present invention provides a temperature-regulating composite material including a thermoplastic material, a phase change material, and an antioxidant. A content of the thermoplastic material of the temperature-regulating composite material accounts for between 60wt% and 99wt% of an overall weight of the temperature-regulating composite material. A content of the phase change material of the temperature-regulating composite material accounts for between 1wt% and 40wt% of the overall weight of the temperature-regulating composite material. A transition temperature of the phase change material ranges from 0°C to 65°C. An addition of the antioxidant is based on the content of the phase change material of the temperature-regulating composite material. The addition of the antioxidant is less than or equal to 10% of the content of the phase change material of the temperature-regulating composite material. The antioxidant is mixed with the phase change material. The phase change material with the addition of the antioxidant has a decomposition temperature ranging from 140°C to 180°C at 10% thermal weight loss.

In an embodiment, the addition of the antioxidant accounts for between 1% and 5% of the content of the phase change material of the temperature-regulating composite material; the phase change material with the addition of the antioxidant has the decomposition temperature ranging from 150°C to 170°C at 10% thermal weight loss.

In an embodiment, the antioxidant is selected from a group consisting of hindered phenolic antioxidant, aminic antioxidant, phosphite-based antioxidant, thioester antioxidant, and combinations thereof.

In an embodiment, the transition temperature of the phase change material ranges from 0°C to 50°C.

In an embodiment, the phase change material is selected from a group consisting of methyl palmitate, ethyl stearate, ethyl palmitate, butyl stearate, fatty acid ester, stearic acid, propargyl ester, polyethylene glycol, methyl terminated PEG, poly(diethylene glycol hexadecyl ether acrylate (PEGHEA), palmitic acid, ;auric acid, myristic acid, capric acid, caprylic acid, alkane with a carbon number between 16 and 20, and combinations thereof.

In an embodiment, the content of the thermoplastic material of the temperature-regulating composite material accounts for between 70wt% and 85wt% of the overall weight of the temperature-regulating composite material; the content of the phase change material of the temperature-regulating composite material accounts for between 15wt% and 30wt% of the overall weight of the temperature-regulating composite material.

In an embodiment, the thermoplastic material is selected from a group consisting of poly(ethylene), poly(ethylene-co-propylene), poly(ethylene-co-vinyl acetate), poly(ethylene-co-methylpentene), poly(ethylene-co-butene), poly(ethylene-co-isobutylene), poly(ethylene-co-acrylonitrile), poly(ethylene-co-ethylene terephthalate), poly(ethylene-co-styrene), ethylene vinyl alcohol copolymer), poly(ethylene-amide) copolymer), polyethylene-co-poly(vinylpyrrolidone)copolymer), polyethylene-co-poly(vinylidene difluoride)copolymer), poly(ethylene-co-methyl methacrylate), polyethylene-co-poly(vinyl butyral)copolymer), polyethylene-co-poly(butylacrylate) copolymer, polyethylene-co-poly(allyl ethylene diamine) copolymer, polyethylene-co-poly(palmitic acid) copolymer, polyethylene-co-poly(myristic acid) copolymer, polyethylene-co-poly(diallyldimethylammonium chloride)copolymer, and combinations thereof.

The present invention further provides a temperature-regulating fabric including a plurality of composite yarns. Each of the composite yarns includes a core layer and a wrapping layer. The core layer has the temperature-regulating composite material. The temperature-regulating composite material includes a thermoplastic material, a phase change material, and an antioxidant. A content of the thermoplastic material of the temperature-regulating composite material accounts for between 60wt% and 99wt% of an overall weight of the temperature-regulating composite material. A content of the phase change material of the temperature-regulating composite material accounts for between 1wt% and 40wt% of the overall weight of the temperature-regulating composite material. A transition temperature of the phase change material ranges from 0°C to 65°C. An addition of the antioxidant is based on the content of the phase change material of the temperature-regulating composite material. The addition of the antioxidant is less than or equal to 10% of the content of the phase change material of the temperature-regulating composite material. The antioxidant is mixed with the phase change material. The phase change material with the addition of the antioxidant has a decomposition temperature ranging from 140°C to 180°C at 10% thermal weight loss. The wrapping layer correspondingly encloses the core layer. The wrapping layer has a polymeric material. A temperature regulating factor of the temperature-regulating fabric s less than 0.8.

In an embodiment, a content of the core layer accounts for between 25wt% and 50wt% of an overall weight of each of the composite yarns; a content of the wrapping layer accounts for between 50wt% and 75wt% of the overall weight of each of the composite yarns. A content of the thermoplastic material of the core layer accounts for between 13wt% and 60wt% of the overall weight of each of the composite yarns; a content of the phase change material of the core layer accounts for between 0.3wt% and 40wt% of the overall weight of each of the composite yarns.

In an embodiment, a transition temperature of each of the composite yarns ranges from -10°C to 50°C.

In an embodiment, the polymeric material is selected from a group consisting of polyamide, bio-based polyamide, polyester, polyolefin, and combinations thereof.

With the aforementioned design, by adding the antioxidant in a particular content to the phase change material of temperature-regulating composite material, the decomposition temperature of the phase change material could be increased, so that the problem that the phase change material is denatured during a melt-spinning process could be relieved, thereby enhancing the stability of the phase change material during a high temperature heat treatment. In this way, when the temperature-regulating composite material is used to manufacture the composite yarns at high temperature, the antioxidant could reduce (slow) an amount of heat loss of the phase change material. Therefore, the composite yarns have a stable temperature-regulating effect, so that the temperature-regulating fabric correspondingly has a steady and good temperature-regulating effect.

### BRIEF DESCRIPTION OF THE SEVERAL VIEWS OF THE DRAWINGS

The present invention will be best understood by referring to the following detailed description of some illustrative embodiments in conjunction with the accompanying drawings, in which
FIG. 1 is a schematic sectional view of the temperature-regulating fabric according to an embodiment of the present invention;
FIG. 2A is a schematic view of the decomposition temperature of the temperature-regulating composite material of the experimental group 1 according to another embodiment of the present invention;
FIG. 2B is a schematic view of the decomposition temperature of the temperature-regulating composite material of the experimental group 2 according to the another embodiment of the present invention;
FIG. 2C is a schematic view of the decomposition temperature of the temperature-regulating composite material of the experimental group 3 according to the another embodiment of the present invention; and
FIG. 3 is a schematic view of the DSC curve of the temperature-regulating fabric according to the embodiment of the present invention.

### DETAILED DESCRIPTION OF THE INVENTION

A temperature-regulating composite material according to an embodiment of the present invention includes a thermoplastic material, a phase change material (PCM), and an antioxidant. A content of the thermoplastic material of the temperature-regulating composite material accounts for between 60wt% and 99wt% of an overall weight of the temperature-regulating composite material. A content of the phase change material of the temperature-regulating composite material accounts for between 1wt% and 40wt% of the overall weight of the temperature-regulating composite material. A transition temperature of the phase change material ranges from 0°C to 65°C. In an embodiment, the content of the thermoplastic material of the temperature-regulating composite material accounts for between 70wt% and 85wt% of the overall weight of the temperature-regulating composite material, the content of the phase change material of the temperature-regulating composite material accounts for between 15wt% and 30wt% of the overall weight of the temperature-regulating composite material, and the transition temperature of the phase change material ranges from 0°C to 50°C.

The thermoplastic material is selected from a group consisting of poly(ethylene), poly(ethylene-co-propylene), poly(ethylene-co-vinyl acetate), poly(ethylene-co-methylpentene), poly(ethylene-co-butene), poly(ethylene-co-isobutylene), poly(ethylene-co-acrylonitrile), poly(ethylene-co-ethylene terephthalate), poly(ethylene-co-styrene), ethylene vinyl alcohol copolymer), poly(ethylene-amide) copolymer), polyethylene-co-poly(vinylpyrrolidone)copolymer), polyethylene-co-poly(vinylidene difluoride)copolymer), poly(ethylene-co-methyl methacrylate), polyethylene-co-poly(vinyl butyral)copolymer), polyethylene-co-poly(butylacrylate) copolymer, polyethylene-co-poly(allyl ethylene diamine) copolymer, polyethylene-co-poly(palmitic acid) copolymer, polyethylene-co-poly(myristic acid) copolymer, polyethylene-co-poly(diallyldimethylammonium chloride)copolymer, and combinations thereof.

The phase change material is selected from a group consisting of methyl palmitate, ethyl stearate, ethyl palmitate, butyl stearate, fatty acid ester, stearic acid, propargyl ester, polyethylene glycol, methyl terminated PEG, poly(diethylene glycol hexadecyl ether acrylate (PEGHEA), palmitic acid, ;auric acid, myristic acid, capric acid, caprylic acid, alkane with a carbon number between 16 and 20, and combinations thereof.

It is worth mentioning that the phase change material could include any substance (or a mixture of substances) that could absorb or release thermal energy at a temperature stabilizing range. The temperature stabilizing range could include a particular transition temperature. When the phase change material absorbs or releases thermal energy, the phase change material undergoes a transition between two states (e.g., liquid state and solid state, liquid state and gas state, solid state and gas state, two solid states), and continuously absorbs or releases a latent heat of the phase change material during heating or cooling. The term "latent heat" refers to an amount of thermal energy absorbed or released by the phase change material as the phase change material undergoes a transition between two states. The thermal energy could be stored in the phase change material or released from the phase change material.

An addition of the antioxidant is based on the content of the phase change material of the temperature-regulating composite material. The addition of the antioxidant is less than or equal to 10% of the content of the phase change material of the temperature-regulating composite material. The antioxidant is mixed with the phase change material. The phase change material with the addition of the antioxidant has a decomposition temperature ranging from 140°C to 180°C at 10% thermal weight loss. The antioxidant is added to reduce (slow) the decomposition of the phase change material during a melt-spinning process at high temperature. In an embodiment, the addition of the antioxidant accounts for between 1% and 5% of the content of the phase change material of the temperature-regulating composite material, and the phase change material with the addition of the antioxidant has the decomposition temperature from 150°C to 170°C at 10% thermal weight loss. The antioxidant is selected from a group consisting of hindered phenolic antioxidant, aminic antioxidant, phosphite-based antioxidant, thioester antioxidant, and combinations thereof.

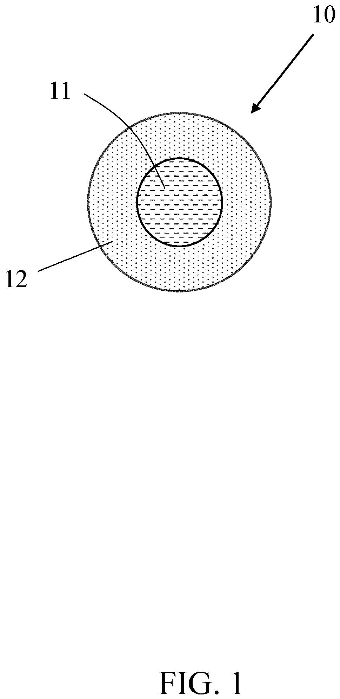

A temperature-regulating fabric according to another embodiment of the present invention is illustrated in FIG. 1 and includes a plurality of composite yarns 10. The composite yarns 10 are interwoven. In the current embodiment, each of the composite yarns 10 includes a core layer 11 and a wrapping layer 12. A cross-section of each of the composite yarns 10 is a circular structure as an example for illustration.

The core layer 11 has the temperature-regulating composite material. The temperature-regulating composite material includes the thermoplastic material, the phase change material, and the antioxidant of the aforementioned embodiment, wherein the type and the content of the thermoplastic material, the phase change material, and the antioxidant of the temperature-regulating composite material are the same as the aforementioned embodiment. A content of the core layer 11 accounts for between 25wt% and 50wt% of an overall weight of each of the composite yarns 10. A content of the thermoplastic material of the core layer 11 accounts for between 13wt% and 60wt% of the overall weight of each of the composite yarns 10. A content of the phase change material of the core layer 11 accounts for between 0.3wt% and 40wt% of the overall weight of each of the composite yarns 10. In an embodiment, the content of the thermoplastic material of the core layer 11 accounts for between 15wt% and 45wt% of the overall weight of each of the composite yarns 10, and the content of the phase change material of the core layer 11 accounts for between 5wt% and 30wt% of the overall weight of each of the composite yarns 10. It is worth mentioning that a change of the content of the core layer 11 in the composite yarns 10 correspondingly affects the content of the phase change material of the core layer 11. More specifically, when the content of the core layer 11 is less than 25wt%, the content of the phase change material of the core layer 11 is correspondingly lowered, thereby reducing a temperature-regulating effect of the composite yarns 10. When the content of the core layer 11 is greater than 50wt%, the content of the phase change material of the core layer 11 is excessive, which affects a spinning stability of the composite yarns 10.

The wrapping layer 12 correspondingly encloses the core layer 11. A content of the wrapping layer 12 accounts for between 50wt% and 75wt% of the overall weight of the composite yarn 10. In the current embodiment, the core layer 11 and the wrapping layer 12 are coaxially arranged, i.e., a center of the core layer 11 overlaps with a center of the wrapping layer 12, but not limited thereto. In other embodiments, the core layer 11 and the wrapping layer 12 could be eccentrically arranged, as long as the wrapping layer 12 encloses the core layer 11; a cross-section of the wrapping layer 12 and a cross-section of the core layer 11 could be changed to other geometric shapes.

Moreover, the wrapping layer 12 has a polymeric material. The polymeric material is selected from a group consisting of polyamide, bio-based polyamide, polyester, polyolefin, and combinations thereof. The polyamide and the bio-based polyamide include polyamide, polyamide 66, polyamide 12, and bio-based polyamide 410. The polyester includes polyethylene terephthalate (PET) or poly(butylene succinate) (PBS). The polyolefin includes polyethylene (PE), polypropylene (PP), or polybutene (PB).

In the current embodiment, a transition temperature of the composite yarns 10 ranges from -10°C to 50°C, and a temperature regulating factor (TRF) of the temperature-regulating fabric is less than 0.8. The temperature regulating factor (TRF) is a measuring result of the dynamic mechanical analyzer. A range of the temperature regulating factor (TRF) is from 0 to 1. When the temperature regulating factor (TRF) is equal to 0, the temperature-regulating fabric has a complete heat-buffering effect. When the temperature regulating factor (TRF) is equal to 1, the temperature-regulating fabric has no heat-buffering effect. The temperature-regulating composite material of the core layer 11 of each of the composite yarns 10 is provided with the antioxidant, so that when a melt-spinning process of the core layer 11 at high temperature is performed, the antioxidant could reduce (slow) an amount of heat loss of the phase change material. In this way, the core layer 11 of the composite yarns 10 has the temperature-regulating effect, so that the temperature-regulating fabric correspondingly has a steady and good temperature-regulating effect.

In order to thoroughly illustrate the primary objective, features, and functions of the present invention, the current embodiment provides analyses of the decomposition temperature and the transition temperature of the temperature-regulating composite material and experiments for mechanical properties of the composite yarns 10 and the temperature regulating factor (TRF) of the temperature-regulating fabric.

### 1. Experimental materials:

The thermoplastic material of the temperature-regulating composite material is poly(ethylene) (PE). The phase change material is alkane with a carbon number between 16 and 20. The antioxidant is phosphite-based antioxidant. These are not a limitation of the present invention.

### 2. Compositions and contents of experimental groups 1~3:

The experimental group 1: a content of poly(ethylene) (PE) ranges from 70wt% to 85wt% of the overall weight of the temperature-regulating composite material. A content of alkane with the carbon number between 16 and 20 ranges from 15wt% to 30wt% of the overall weight of the temperature-regulating composite material. A content of the phosphite-based antioxidant content ranges from 0% to 1.5% of the content of alkane.

The experimental group 2: a content of poly(ethylene) (PE) ranges from 70wt% to 85wt% of the overall weight of the temperature-regulating composite material. A content of alkane with the carbon number between 16 and 20 ranges from 15wt% to 30wt% of the overall weight of the temperature-regulating composite material. A content of the phosphite-based antioxidant content ranges from 2% to 3.5% of the content of alkane.

The experimental group 3: a content of poly(ethylene) (PE) content ranges from 70wt% to 85wt% of the overall weight of the temperature-regulating composite material. A content of alkane with the carbon number between 16 and 20 ranges from 15wt% to 30wt% of the overall weight of the temperature-regulating composite material. A content of the phosphite-based antioxidant content ranges from 4% to 6% of the content of alkane.

### Decomposition experiment and results:

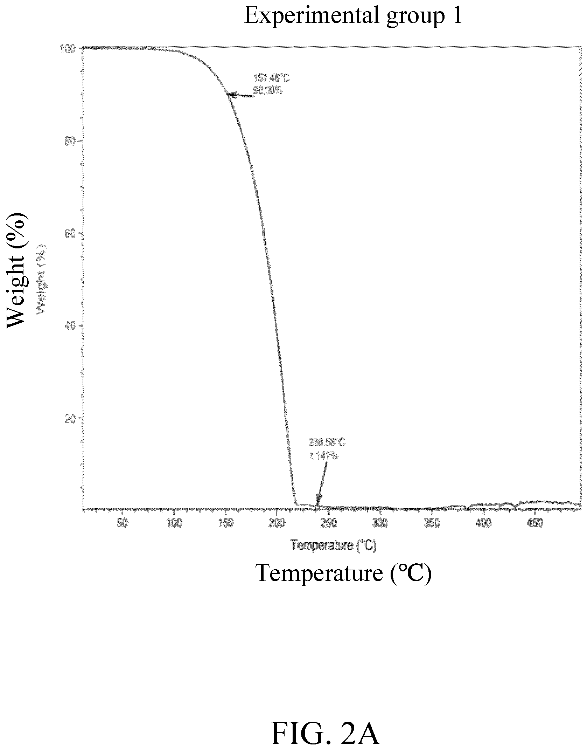

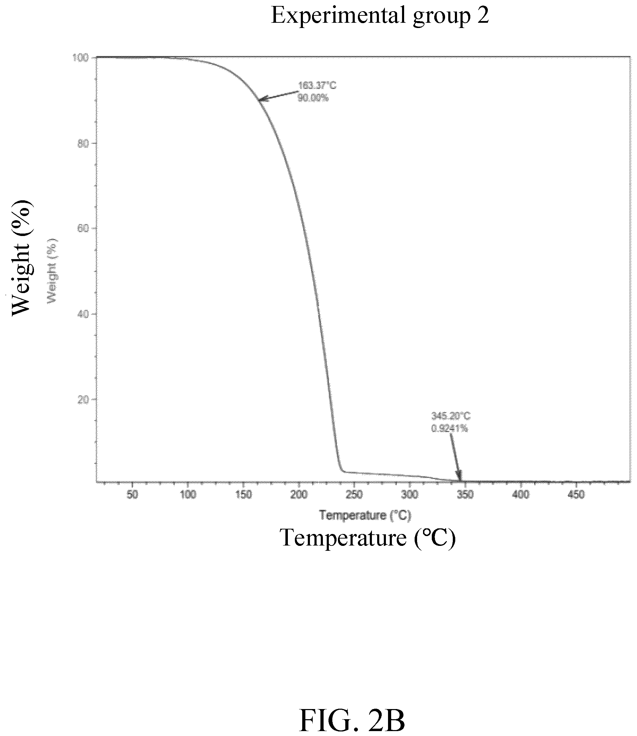

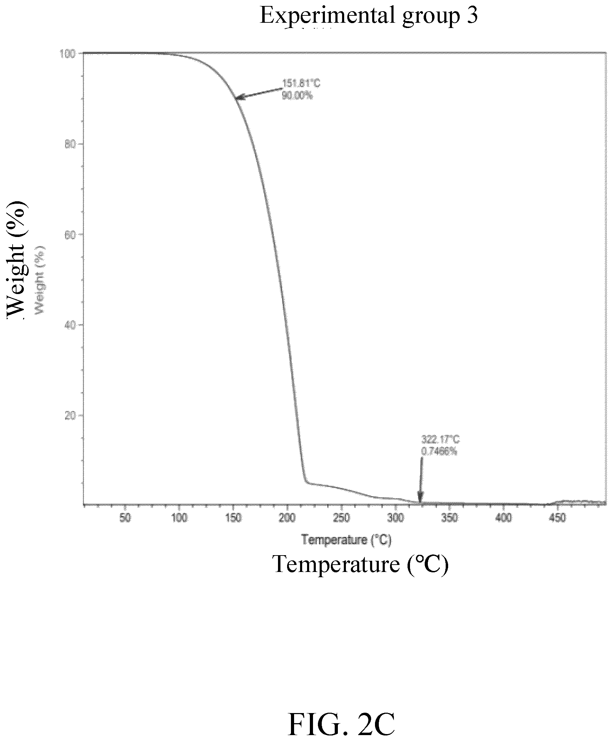

Decomposition temperatures (Td) of the experimental groups 1~3 are measured by using thermogravimetric analyzer. The results are listed in Table 1. Please refer to FIG. 2A to FIG. 2C.

**Table 1: table of the results of the decomposition temperatures of the experimental groups 1~3**

| Item | Decomposition temperature (°C) at 10% thermal weight loss | Decomposition temperature (°C) at 99% thermal weight loss |
|---|---|---|
| Experimental group 1 | 151.46°C | 238.6°C |
| Experimental group 2 | 163.37°C | 345.2°C |
| Experimental group 3 | 151.81°C | 322.2°C |

It could be seen from Table 1 that the decomposition temperatures of the experimental groups 1~3 at 10% thermal weight loss range from 150°C to 170°C. The decomposition temperature of the experimental group 1 is 151.46°C. The decomposition temperature of the experimental group 2 is 163.37°C. The decomposition temperature of the experimental group 3 is 151.81°C. Accordingly, the decomposition temperature of the experimental group 2 is clearly higher than the decomposition temperature of the experimental group 1 and the decomposition temperature of the experimental group 3, indicating that the phase change material with the addition of the antioxidant in the range from 2% to 3.5% could correspondingly increase the decomposition temperature of the phase change material, thereby enhancing a stability of the phase change material during high temperature heat treatment.

### 3. Experiment for determining physical properties and latent heat of the composite yarns 10:

In the current experiment, the composite yarns 10 include the type and the content of the core layer 11 and the wrapping layer 12. The temperature-regulating composite material of the core layer 11 is the same as the experiment group 2, i.e., the addition of the antioxidant ranges from 2% to 3.5%. A content of the core layer 11 ranges from 30wt% to 40wt%. A polymeric material of the wrapping layer 12 is polyamide 6. A content of the wrapping layer 12 ranges from 60wt% to 70wt%. The current experiment tests the physical properties of the composite yarns 10, namely denier, strength, elongation rate, oil pick-up, shrinkage recovery rate, knot count (K/M), and fastness, and the transition temperature and the latent heat. Denier is tested according to ASTM D1907-7 standard. Strength is tested according to ASTM D2256 standard. Elongation is tested according to ASTM D2256 standard. Oil pick-up, shrinkage recovery rate, knot count, and fastness are tested according to ACELON ISO standard. The transition temperature and the latent heat of the composite yarns 10 are tested by using differential scanning calorimeter (DSC), so that a peak temperature and a latent heat value of the composite yarn 10 during absorbing and releasing thermal energy are measured. Results of the experiment for the physical properties and latent heat of the composite yarns 10 are listed in Table 2.

**Table 2: table of the results of the experiment for the physical properties and latent heat of the composite yarns 10**

| Physical properties | Composite yarns of the current experiment |
|---|---|
| Denier (den) | 52.3 |
| Strength (gf/d) | 3.4 |
| Elongation rate (%) | 45.8 |
| Oil pick-up (OPU)% | 2.0 |
| Shrinkage recovery rate (CR)% | 8.1 |
| Knot count (K/M) | 88.1 |
| Fastness (%) | 91.5 |
| Endothermic latent heat (J/g) | 3.947 |
| Exothermic latent heat (J/g) | 12.63 |

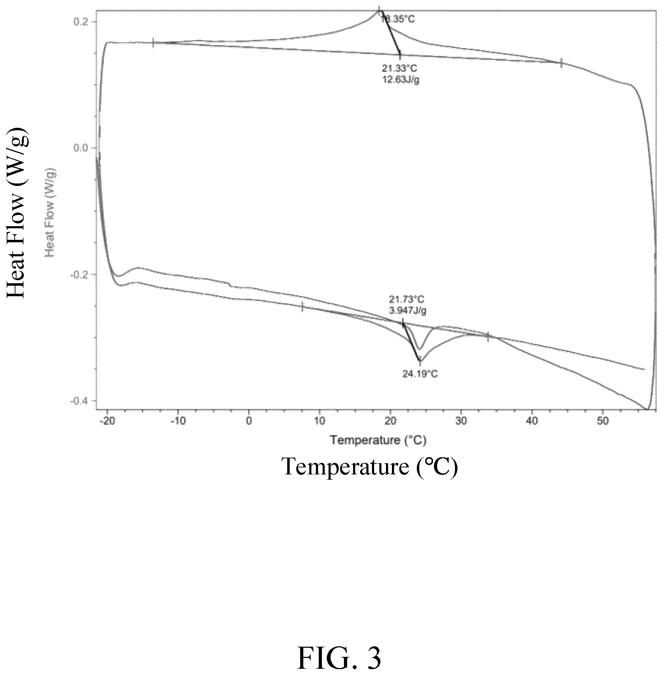

It could be seen from Table 2 that the composite yarns 10 of the current experiment has a good physical strength. Referring to FIG. 3, the composite yarns 10 have a peak value of an endothermic peak equal to 31.193+7°C, an endothermic latent heat equal to 3.947J/g, a peak value of an exothermic peak equal to 25.35+7°C, and an exothermic latent heat equal to 12.63J/g. In this way, the transition temperature of the composite yarns 10 falls within the range from -10°C to 50°C, and a latent heat of the composite yarns 10 falls within the range from 1J/g to 20J/g.

Moreover, the temperature regulating factor of the temperature-regulating fabric of the current experiment is determined. An experimental group 4 and a control group are provided. The experimental group 4 is the temperature-regulating fabric of the current embodiment and is formed by weaving the composite yarns 10 of the current experiment. The core layer 11 of the composite yarns 10 has the temperature-regulating composite material. The addition of the antioxidant in the temperature-regulating composite material is from 2% to 3.5%. A difference between a fabric of the control group and the experimental group 4 is that the fabric of the control group does not include the phase change material, i.e., the control group is formed by weaving 100% polyamide 6 yarns. Both the temperature-regulating fabric of the experimental group 4 and the fabric of the control group are 26-gauge seamless fabrics.

Dynamic Mechanical Analyzer is used to measure a temperature regulating factor (TRF) of the experimental group 4 and a temperature regulating factor (TRF) of the control group. The temperature regulating factor is measured according to ASTM D7024 standard test method for steady state and dynamic thermal performance of textile materials. Results of the experiment are listed in Table 3.

**Table 3: table of the results of the temperature regulating factor of the experimental group 4 and the control group**

| Item | Experimental group 4 | Control group |
|---|---|---|
| Temperature regulating factor (TRF) | 0.73 | 0.8 |

It could be seen from Table 3 that the temperature regulating factor of the experimental group 4 is 0.73 and the temperature regulating factor of the control group is 0.8. In this way, the experimental group 4 could lower the temperature regulating factor compared to the control group, indicating that the temperature-regulating fabric of the experimental group 4 has a good temperature-regulating function. In summary of the aforementioned experiment, by adding the antioxidant in a particular content to the phase change material of the temperature-regulating composite material of the current embodiment, the decomposition temperature of the phase change material could be increased, so that the problem that the phase change material is denatured during a melt-spinning process could be relieved, thereby enhancing the stability of the phase change material during a high temperature heat treatment and reducing (slowing) the amount of heat loss of the phase change material of the composite yarns 10. In this way, the composite yarns 10 have a stable temperature-regulating effect, so that the temperature-regulating fabric has a steady and good temperature-regulating effect.

## Claims

1. A temperature-regulating composite material, comprising a thermoplastic material, a phase change material, and an antioxidant, wherein a content of the thermoplastic material accounts for between 60wt% and 99wt% of an overall weight of the temperature-regulating composite material; a content of the phase change material accounts for between 1wt% and 40wt% of the overall weight of the temperature-regulating composite material; a transition temperature of the phase change material ranges from 0°C to 65°C; an addition of the antioxidant is based on the content of the phase change material; the addition of the antioxidant accounts for between 1% and 5% of the content of the phase change material; the antioxidant is mixed with the phase change material; the phase change material with the addition of the antioxidant has a decomposition temperature ranging from 150°C to 170°C at 10% thermal weight loss.

2. The temperature-regulating composite material as claimed in claim 1, wherein the antioxidant is selected from a group consisting of hindered phenolic antioxidant, aminic antioxidant, phosphite-based antioxidant, thioester antioxidant, and combinations thereof.

3. The temperature-regulating composite material as claimed in claim 1, wherein the transition temperature of the phase change material ranges from 0°C to 50°C.

4. The temperature-regulating composite material as claimed in claim 1, wherein the phase change material is selected from a group consisting of methyl palmitate, ethyl stearate, ethyl palmitate, butyl stearate, fatty acid ester, stearic acid, propargyl ester, polyethylene glycol, methyl terminated PEG, poly(diethylene glycol hexadecyl ether acrylate (PEGHEA), palmitic acid, auric acid, myristic acid, capric acid, caprylic acid, alkane with a carbon number between 16 and 20, and combinations thereof.

5. The temperature-regulating composite material as claimed in claim 1, wherein the content of the thermoplastic material accounts for between 70wt% and 85wt% of the overall weight of the temperature-regulating composite material; the content of the phase change material accounts for between 15wt% and 30wt% of the overall weight of the temperature-regulating composite material.

6. The temperature-regulating composite material as claimed in claim 1, wherein the thermoplastic material is selected from a group consisting of poly(ethylene), poly(ethylene-co-propylene), poly(ethylene-co-vinyl acetate), poly(ethylene-co-methylpentene), poly(ethylene-co-butene), poly(ethylene-co-isobutylene), poly(ethylene-co-acrylonitrile), poly(ethylene-co-ethylene terephthalate), poly(ethylene-co-styrene), ethylene vinyl alcohol copolymer), poly(ethylene-amide) copolymer), polyethylene-co-poly(vinylpyrrolidone)copolymer), polyethylene-co-poly(vinylidene difluoride)copolymer), poly(ethylene-co-methyl methacrylate), polyethylene-co-poly(vinyl butyral)copolymer), polyethylene-co-poly(butylacrylate) copolymer, polyethylene-co-poly(allyl ethylene diamine) copolymer, polyethylene-co-poly(palmitic acid) copolymer, polyethylene-co-poly(myristic acid) copolymer, polyethylene-co-poly(diallyldimethylammonium chloride)copolymer, and combinations thereof.
